# FASCICULE DE BREVET EUROPEEN

(11) **EP 3 516 764 B1**
(45) Date de publication et mention de la délivrance du brevet: **14.07.2021**
(21) Numéro de dépôt: 17742443.9
(22) Date de dépôt: 26.07.2017
(51) Int. Cl.: H02P 6/16, B60S 1/16, H02K 7/116

(54) **MOTO-RÉDUCTEUR, SYSTÈME D'ESSUYAGE ET PROÉDÉ DE COMMANDE ASSOCIÉS**
GETRIEBEMOTOR, ZUGEHÖRIGES WISCHERSYSTEM UND ZUGEHÖRIGES STEUERUNGSVERFAHREN
GEAR MOTOR, ASSOCIATED WIPER SYSTEM AND ASSOCIATED CONTROL METHOD

(30) Priorité: 22.09.2016 FR 1658926
(43) Date de publication de la demande: 31.07.2019
(73) Titulaire: Valeo Systèmes d'Essuyage, 78322 Le Mesnil Saint Denis (FR)
(72) Inventeur: FLOQUET, Frédéric, 49000 Angers (FR); HERRADA, Jose-Luis, 78322 Le Mesnil Saint Denis (FR)
(74) Mandataire: Valeo Vision
(86) Numéro de dépôt international: PCT/EP2017/068822
(87) Numéro de publication internationale: WO 2018/054581

(56) Documents cités:
- EP-A1- 2 840 700
- US-A1- 2004 108 789
- US-A1- 2014 097 777
- HYUNBAE KIM ET AL: "Using low resolution position sensors in bumpless position/speed estimation methods for low cost PMSM drives", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 4, 2 octobre 2005 (2005-10-02), pages 2518-2525, XP010842762, DOI: 10.1109/IAS.2005.1518814 ISBN: 978-0-7803-9208-3

## Description

La présente invention concerne un moto-réducteur et notamment un moto-réducteur pour systèmes d'essuyage de véhicule automobile.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balais qui présentent de nombreux avantages comme une grande durée de vie, un encombrement et une consommation réduits ainsi qu'un faible niveau sonore.

Cependant, la commande des moteurs électriques est plus complexe par rapport aux moteurs électriques à balais car pour permettre un bon fonctionnement, il est nécessaire de connaître précisément la position angulaire du rotor du moteur électrique à courant continu sans balai.

En effet, de tels moteurs électriques comprennent des bobines d'excitation électromagnétique disposées au niveau du stator et alimentées alternativement via un onduleur pour permettre l'entraînement d'aimants permanents disposés sur le rotor.

Or, afin de pouvoir commuter les interrupteurs de l'onduleur et donc l'alimentation des bobines électromagnétiques à des instants optimaux pour permettre d'obtenir l'entraînement désiré du rotor, il convient de connaître la position du rotor au moins par secteurs avec quelques points précis lors de la commutation d'état. (En général, pour une excitation trapézoïdale, six commutations à chaque tour du rotor.

Le document EP2840700 décrit un moto-réducteur, notamment pour système d'essuyage, suivant le préambule de la revendication 1.

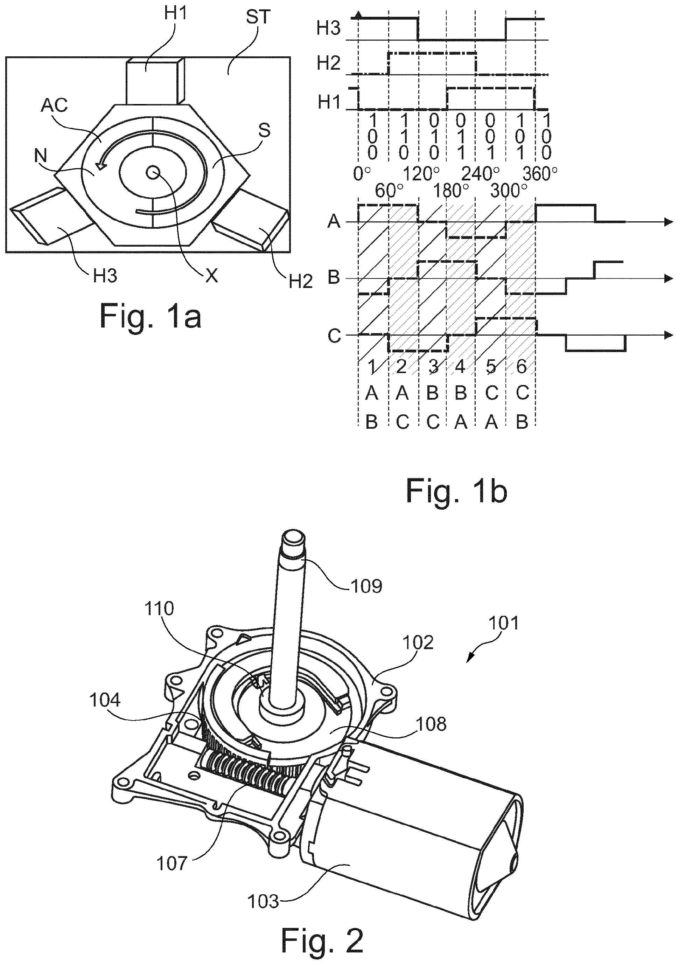

Sur la figure 1a est représenté un schéma d'un dispositif de détection angulaire du rotor d'un moteur électrique comprenant trois capteurs à effet Hall selon l'état de la technique. Comme on le voit sur cette figure, trois capteurs à effet Hall notés H1, H2 et H3 sont disposés sur le stator ST autour d'un aimant de commande AC, par exemple un aimant annulaire, solidaire du rotor du moteur électrique à courant continu dont seul l'axe X est visible sur la figure 1a. L'aimant de commande AC comprend deux pôles notés S pour le pôle Sud et N pour le pôle Nord.

Les trois capteurs à effet Hall H1, H2 et H3 sont répartis angulairement à 120° les uns des autres de manière à obtenir les six instants de commutation des bobines d'excitation électromagnétique du stator par cycle correspondant à un angle de rotation de 60° du rotor.

La figure 1b représente, dans sa partie supérieure, les signaux issus des trois capteurs à effet Hall H1, H2 et H3 et, dans sa partie inférieure, les signaux d'alimentation des bobines d'excitation électromagnétique lors d'un cycle de 360° du rotor. Le cycle est divisé en 6 étapes de 60° délimitées par les traits en pointillés verticaux.

Dans une première étape notée 1 allant de 0 à 60° correspondant à un signal haut du capteur H3 et à un signal bas des capteurs H1 et H2, le courant passe de la phase A vers la phase B (le signal correspondant à la phase A est à 1, le signal correspondant à la phase B est à -1 et le signal correspondant à la phase C est à 0).

Dans une deuxième étape notée 2 allant de 60 à 120° correspondant à un signal haut des capteurs H2 et H3 et à un signal bas du capteur H1, le courant passe de la phase A vers la phase C (le signal correspondant à la phase A est à 1, le signal correspondant à la phase B est à 0 et le signal correspondant à la phase C est à -1).

Dans une troisième étape notée 3 allant de 120 à 180° correspondant à un signal haut du capteur H2 et à un signal bas des capteurs H1 et H3, le courant passe de la phase B vers la phase C (le signal correspondant à la phase B est à 1, le signal correspondant à la phase A est à 0 et le signal correspondant à la phase C est à -1).

Dans une quatrième étape notée 4 allant de 180 à 240° correspondant à un signal haut des capteurs H1 et H2 et à un signal bas du capteur H3, le courant passe de la phase B vers la phase A (le signal correspondant à la phase B est à 1, le signal correspondant à la phase C est à 0 et le signal correspondant à la phase A est à -1).

Dans une cinquième étape notée 5 allant de 240 à 300° correspondant à un signal haut du capteur H1 et à un signal bas des capteurs H2 et H3, le courant passe de la phase C vers la phase A (le signal correspondant à la phase C est à 1, le signal correspondant à la phase B est à 0 et le signal correspondant à la phase A est à -1).

Dans une sixième étape notée 6 allant de 300 à 360° correspondant à un signal haut des capteurs H1 et H3 et à un signal bas du capteur H2, le courant passe de la phase C vers la phase B (le signal correspondant à la phase C est à 1, le signal correspondant à la phase A est à 0 et le signal correspondant à la phase B est à -1).

Ainsi, l'utilisation de trois capteurs à effet Hall H1, H2 et H3 permet de déterminer précisément les six positions du rotor correspondant aux six instants de changement de commutation des bobines d'excitation électromagnétique.

Cependant, une telle solution est coûteuse du fait du nombre élevé de capteurs à effet Hall nécessaires.

Par ailleurs, il est également connu d'utiliser une méthode sans capteurs basée sur la mesure des forces contre-électromotrices des bobines d'excitation du stator.

Toutefois, une telle solution nécessite un démarrage du moteur électrique à courant continu sans balais en mode synchrone jusqu'à ce que la vitesse de rotation du rotor et donc les forces contre-électromotrices soient suffisantes pour être mesurées et pour pouvoir servir à la commande des instants de commutation.

Or, un tel démarrage en mode synchrone n'est possible que pour des applications où la charge est faible au démarrage et relativement connue (par exemple pour la commande d'un ventilateur). On comprend donc que cette solution n'est pas applicable à un moto-réducteur pour un système d'essuyage de véhicule automobile qui requiert une charge et un couple de force élevés dès le démarrage et qui peut être démarrer avec des charges quasi nulles comme dans le cas de vitres mouillées) ou avec des charges élevées (comme dans le cas de balais collés du fait de la glace ou de la neige).

La présente invention vise donc à fournir une solution pour permettre une commande efficace d'un moto-réducteur pour système d'essuyage dont le coût est inférieur à la solution de l'état de la technique comprenant trois capteurs à effet Hall.

A cet effet, la présente invention concerne un moto-réducteur, notamment pour un système d'essuyage, comprenant :
- un moteur électrique à courant continu sans balais comportant :
- un rotor,
- un stator présentant des bobines d'excitation électromagnétique du rotor,
- un dispositif de détermination de la position angulaire du rotor par rapport au stator,

Soit un unique capteur à effet Hall soit deux capteurs à effet Hall décalés angulairement l'un par rapport à l'autre, le capteur ou les capteurs à effet Hall étant associé(s) à un aimant de commande solidaire en rotation au rotor, et connecté au dispositif de détermination de la position angulaire du rotor,
- une unité de commande configurée pour générer des signaux de commande pour alimenter les bobines d'excitation électromagnétique du stator en fonction de la position angulaire du rotor déterminée par le dispositif de détermination de la position angulaire du rotor,
- un mécanisme réducteur relié d'un côté au rotor du moteur électrique et de l'autre côté à un arbre de sortie destiné à être relié à un mécanisme externe, notamment un système d'essuyage, le mécanisme réducteur présentant un rapport de réduction prédéfini et,
- un capteur de position angulaire de sortie configuré pour mesurer la position angulaire de l'arbre de sortie,
dans lequel le capteur de position angulaire de sortie configuré pour mesurer la position angulaire de l'arbre de sortie est connecté au dispositif de détermination de la position angulaire du rotor et est configuré pour transmettre un signal correspondant à la position angulaire mesurée de l'arbre de sortie et en ce que ledit dispositif de détermination de la position angulaire du rotor est configuré pour déterminer la position du rotor par rapport au stator à partir du signal transmis en prenant en compte le rapport de réduction prédéfini du mécanisme réducteur, et pour corriger la mesure angulaire issue du capteur de position angulaire de sortie à partir du signal issu du capteur ou des capteurs à effet Hall.

L'utilisation d'un capteur de position angulaire de sortie configuré pour mesurer la position angulaire de l'arbre de sortie du moto-réducteur pour déterminer la position du rotor permet de commander un moteur électrique à courant continu sans balais même pour des fortes charge lors du démarrage comme cela est le cas pour un moto-réducteur d'un dispositif d'essuyage.

Selon un aspect de la présente invention, le dispositif de détermination de la position angulaire du rotor est configuré pour :
- déterminer la position angulaire du rotor à partir d'un signal issu du capteur de position angulaire de sortie pour des vitesses de rotation du rotor inférieures à un seuil prédéterminé, et
- déterminer la position angulaire du rotor à partir des signaux de forces contre-électromotrices issus des bobines d'excitation électromagnétique du stator pour des vitesses de rotation du rotor égales ou supérieures au seuil prédéterminé.

Selon un autre aspect de la présente invention, la force contre-électromotrice de la, au moins une, bobine d'excitation électromagnétique non alimentée est mesurée et transmise au dispositif de détermination de la position angulaire du rotor, ledit dispositif de détermination de la position angulaire du rotor étant configuré pour comparer la valeur de la force contre-électromotrice à un seuil prédéterminé associé à une position prédéterminée du rotor.

Selon un aspect additionnel de la présente invention, le dispositif de détermination de la position angulaire du rotor est configuré pour corriger la mesure angulaire issue du capteur de position angulaire de sortie à partir des signaux de mesure des forces contre-électromotrices des bobines d'excitation électromagnétique du stator.

L'utilisation des forces contre électromotrices pour corriger la mesure angulaire issue du capteur de position angulaire permet d'améliorer la précision de la mesure angulaire du rotor sans nécessiter de capteur supplémentaire.

Selon un aspect supplémentaire de la présente invention, le moteur électrique à courant continu sans balais comprend un unique capteur à effet Hall associé à un aimant de commande solidaire en rotation du rotor, ledit capteur à effet Hall étant connecté au dispositif de détermination de la position angulaire du rotor et dans lequel ledit dispositif de détermination de la position angulaire du rotor est configuré pour corriger la mesure angulaire issue du capteur de position angulaire de sortie à partir du signal issu du capteur à effet Hall.

L'utilisation d'un capteur à effet Hall permet d'améliorer la précision de la mesure angulaire du rotor en corrigeant la mesure issue du capteur de position angulaire de sortie.

Selon un autre aspect de la présente invention, le dispositif de détermination de la position angulaire du rotor est configuré pour détecter un changement d'état du signal issu du capteur à effet Hall, ledit changement d'état étant associé à une position prédéterminée du rotor et pour corriger la mesure issue du capteur de position angulaire de sortie à partir de ladite détection du changement d'état.

Selon un aspect additionnel de la présente invention :
- le rotor comprend un nombre de pôles magnétiques prédéterminé,
- l'aimant de commande comprend un nombre de pôles magnétiques égal ou supérieur au nombre de pôles magnétique du rotor et,
- les pôles magnétiques de l'aimant de commande sont en phase avec des pôles magnétiques du rotor de sorte que l'envoi d'un signal de commande d'alimentation des bobines d'excitation électromagnétique du stator est synchronisé avec la détection d'un changement d'état du signal issu du capteur à effet Hall.

L'utilisation d'un capteur à effet Hall associé à un aimant de commande dont les pôles sont en phase avec des pôles magnétiques du rotor permet de déterminer de manière fiable les instants de commande des commutations des bobines d'excitation électromagnétique permettant l'entraînement du rotor.

Selon un aspect supplémentaire de la présente invention, le moteur électrique comprend deux capteurs à effet Hall associés à un aimant de commande solidaire en rotation du rotor, lesdits capteurs à effet Hall étant décalés angulairement l'un par rapport à l'autre et connectés au dispositif de détermination de la position angulaire du rotor et dans lequel ledit dispositif de détermination de la position angulaire du rotor est configuré pour corriger le signal de mesure angulaire issu du capteur de position angulaire de sortie à partir des signaux issus des deux capteurs à effet Hall.

L'utilisation de deux capteurs à effet Hall permet d'améliorer encore la précision de la mesure angulaire du rotor et/ou de réduire la précision nécessaire au capteur de position angulaire de sortie pour permettre une commande fiable des commutations des bobines d'excitation électromagnétique.

Selon un aspect additionnel de la présente invention, le dispositif de détermination de la position angulaire du rotor est configuré pour :
- déterminer la position angulaire du rotor à partir des signaux issus d'une part du ou des capteurs à effet Hall et d'autre part du capteur de position angulaire de sortie pour des vitesses de rotation du rotor inférieures à un seuil prédéterminé, et
- déterminer la position angulaire du rotor à partir des signaux de forces contre-électromotrices issus des bobines d'excitation électromagnétique du stator pour des vitesses de rotation du rotor égales ou supérieures au seuil prédéterminé,
et dans lequel le dispositif de détermination de la position angulaire du rotor est configuré pour corriger la mesure angulaire issue du ou des capteurs à effet Hall et/ou du capteur de position angulaire de sortie à partir des signaux de mesure des forces contre-électromotrices des bobines d'excitation électromagnétique du stator.

L'utilisation des forces contre électromotrices pour corriger la mesure angulaire issue du ou des capteurs à effet Hall et/ou du capteur de position angulaire permet d'améliorer la précision de la mesure angulaire du rotor sans nécessiter de capteur supplémentaire.

La présente invention concerne également un système d'essuyage, notamment pour véhicule automobile comprenant un moto-réducteur tel que décrit précédemment.

La présente invention concerne également un procédé de commande d'un moteur électrique d'un moto-réducteur, notamment pour systèmes d'essuyage, suivant la revendication 9.

Selon un aspect supplémentaire de la présente invention, on corrige la mesure angulaire issue du capteur de position angulaire de sortie et du ou des capteurs à effet Hall à partir des signaux de force contre électromotrices.

D'autres caractéristiques et avantages de l'invention ressortiront de la description suivante, donnée à titre d'exemple et sans caractère limitatif, en regard des dessins annexés sur lesquels :
- la figure 1a représente un schéma d'un dispositif de détection angulaire du rotor d'un moteur électrique comprenant trois capteurs à effet Hall selon l'état de la technique,
- La figure 1b représente un diagramme des signaux fournis par les capteurs de la figure 1a et des signaux de commande des bobines d'excitation électromagnétique du moteur électrique,
- la figure 2 représente un schéma d'un moto-réducteur,
- les figure 3a, 3b et 3c représentent des schémas fonctionnels d'un moteur électrique,
- la figure 4 représente un schéma d'un capteur à effet Hall associé à un aimant de commande selon un premier mode de réalisation,
- la figures 5 représente un graphique de la position angulaire du rotor par rapport à un signal fourni par un capteur de position angulaire d'un arbre de sortie du moto-réducteur ainsi que les signaux de commande des bobines d'excitation électromagnétique,
- la figures 6 représente un graphique de la position angulaire du rotor par rapport à un signal fourni par un capteur de position angulaire d'un arbre de sortie du moto-réducteur ainsi que les signaux de commande des bobines d'excitation électromagnétique et un signal fourni par un capteur à effet Hall,
- la figure 7 représente un capteur à effet Hall associé à un aimant de commande selon un deuxième mode de réalisation,
- la figure 8 représente un graphique des signaux fournis par le capteur à effet Hall de la figure 7 et un capteur de position angulaire d'un arbre de sortie du moto-réducteur ainsi que les signaux de commande des bobines d'excitation électromagnétique,
- la figure 9 représente deux capteurs à effet Hall associés à un aimant de commande selon un troisième mode de réalisation,
- la figure 10 représente un graphique des signaux fournis par les capteurs à effet Hall de la figure 9 et un capteur de position angulaire d'un arbre de sortie du moto-réducteur ainsi que les signaux de commande des bobines d'excitation électromagnétique,
- la figure 11 représente deux capteurs à effet Hall associés à un aimant de commande selon un quatrième mode de réalisation,
- la figure 12 représente un graphique des signaux fournis par les capteurs à effet Hall de la figure 11 et un capteur de position angulaire d'un arbre de sortie du moto-réducteur ainsi que les signaux de commande des bobines d'excitation électromagnétique,
- la figure 13 représente deux capteurs à effet Hall associés à un aimant de commande selon un cinquième mode de réalisation,
- la figure 14 représente un graphique des signaux fournis par les capteurs à effet Hall de la figure 13 et un capteur de position angulaire d'un arbre de sortie du moto-réducteur ainsi que les signaux de commande des bobines d'excitation électromagnétique.

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

La figure 2 représente un exemple d'un moto-réducteur 101 destiné à équiper un système d'essuyage de véhicule automobile.

Le moto-réducteur 101 comprend un carter 102 sur lequel sont montés un moteur électrique 103 couplé à un mécanisme réducteur 104 ayant un rapport de réduction prédéfini, par exemple typiquement un rapport 1/69.

Le mécanisme réducteur 104 comprend une vis sans fin 107 entraînée en rotation par le moteur électrique 103 et une roue dentée 108 solidaire d'un arbre de sortie 109 monté mobile en rotation suivant un axe sensiblement perpendiculaire à l'axe de rotation de la vis sans fin 107.

Le mécanisme réducteur 104 est agencé de manière à ce que la vis sans fin 107 coopère par engrènement avec la roue dentée 108, de sorte que l'arbre de sortie 109 est en mesure d'être entraîné indirectement en rotation par le moteur électrique 103.

L'arbre de sortie 109 est généralement relié soit directement soit via une timonerie à un bras d'essuyage sur lequel est fixé un balai d'essuyage.

Afin de commander le système d'essuyage et notamment la vitesse du balai d'essuyage, un capteur de position angulaire de sortie 110 (schématiquement représenté sur la figure 2) est disposé au niveau de l'arbre de sortie 109. Le capteur de position angulaire de sortie 110 est par exemple un capteur angulaire analogique qui permet de connaître la position angulaire de l'arbre de sortie 109 avec une précision de 0,1°.

Dans le cadre de la présente invention, le moteur électrique 103 est un moteur électrique à courant continu sans balais.

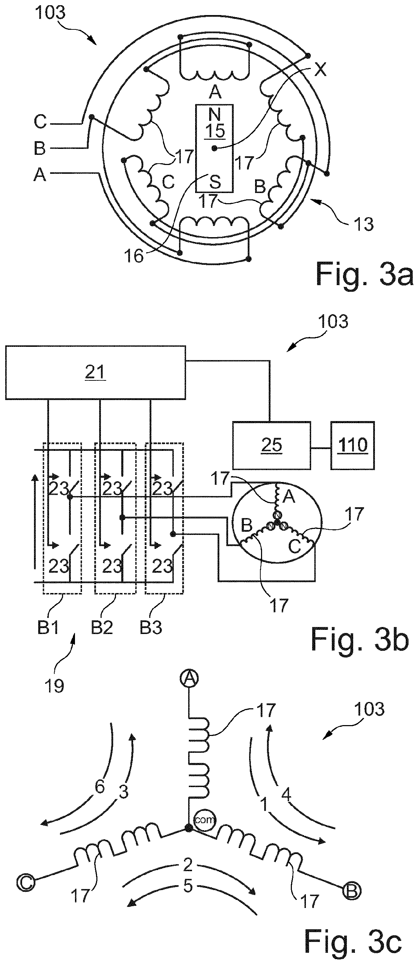

Comme représenté sur la figure 3a qui représente une vue schématique en coupe transversale, le moteur électrique 103 comprend un stator 13 de forme cylindrique au centre duquel vient se loger un rotor 15.

Le rotor 15 est monté mobile en rotation autour de l'axe central X du moteur électrique 103 et comprend un aimant permanent 16 dont les pôles magnétiques sont représentés par les lettres N pour le pôle Nord et S pour le pôle Sud. Cependant, la présente invention ne se limite pas à un aimant permanent 16 du rotor 15 comprenant deux pôles mais s'étend également à un aimant permanent comprenant un nombre de pôles magnétiques plus élevé.

Le stator 13 comprend des bobines d'excitation électromagnétique 17 du rotor 15 disposées autour du rotor 15. Les bobines d'excitation électromagnétique 17 sont réparties régulièrement sur la circonférence du stator 13. Le moteur électrique 103 est ici un moteur triphasé dont les phases sont notées A, B et C. Les bobines d'excitation électromagnétique 17 sont au nombre de six (deux bobines étant associées pour former une phase) et sont reliées selon un montage en étoile ou montage Y.

Bien entendu, un nombre différents de bobines d'excitation électromagnétique 17 ainsi qu'un montage différent, par exemple en triangle peuvent également être utilisé.

Comme représenté sur la figure 3b, les bobines d'excitation électromagnétique 17 sont alimentées par un onduleur 19 géré par une unité de commande 21.

L'onduleur 19 comprend trois branches notées B1, B2 et B3 destinées à alimenter les phases respectives A, B et C du stator 13.

Chaque branche B1, B2 ou B3 comprend deux interrupteurs 23 dont la commutation entraîne l'alimentation ou non des bobines d'excitation électromagnétique 17 de la phase A, B ou C associée.

Les interrupteurs 23 de l'onduleur 19 sont pilotés par l'unité de commande 21 pour obtenir une séquence de six étapes de commutation représentées par des flèches numérotées de 1 à 6 sur la figure 3c.

La première étape 1 correspond au passage du courant de la phase A à la phase B, la deuxième étape 2 correspond au passage du courant de la phase C à la phase B, la troisième étape 3 correspond au passage du courant de la phase C à la phase A, la quatrième 4 correspond au passage du courant de la phase B à la phase A, la cinquième étape 5 correspond au passage du courant de la phase B à la phase C et la sixième étape 6 correspond au passage du courant de la phase A à la phase C.

Les six étapes de commutation correspondent à une rotation de 360° électriques, c'est-à-dire une rotation complète de 360° du rotor dans le cas où l'aimant permanent comprend une seule paire de pôles. Dans le cas d'un aimant comprenant deux paires de pôles, les six étapes de commutation, correspondant à 360° électriques, correspondent à une rotation de 180° du rotor et dans le cas d'un aimant comprenant trois paires de pôles, les six étapes de commutation, correspondant à 360° électriques, correspondent à une rotation de 120° du rotor. Le passage d'une commutation à une autre est donc réalisé à chaque rotation d'un angle de 60° électriques du rotor.

A chaque étape, le courant passe à travers deux phases tandis que la troisième a un potentiel flottant. La séquence des six étapes de commutation permet la création d'un champ magnétique tournant au niveau du stator 13 qui permet l'entraînement en rotation du rotor 15.

Bien que ce schéma de commutation en six étapes soit le plus connu avec une conduction des phases de 120° et une non excitation de 60°, la présente invention ne se limite pas à ce seul schéma de commutation mais s'étend également à des autres types de commutation par exemple avec une conduction des phases de 180° ou intermédiaires ou différents dosage d'excitation pendant la conduction pouvant aller jusqu'à une progression sinusoïdale.

Le moteur électrique 103 comprend également un dispositif de détermination de la position angulaire du rotor 25 (voir figure 3b) connecté à l'unité de commande 21 pour permettre à l'unité de commande 21 de déterminer les différents instants de commutation et commander en conséquence les interrupteurs 23 de l'onduleur 19.

Le dispositif de détermination de la position angulaire du rotor 25 est connecté au capteur de position angulaire de sortie 110 de l'arbre de sortie 109 et est configuré pour déterminer la position du rotor 15 par rapport au stator 13 à partir de la position angulaire de l'arbre de sortie 109 fournie par le capteur de position angulaire 110 et du rapport de réduction du mécanisme réducteur 104.

Ainsi, la mesure fournie par le capteur de position angulaire de sortie 110 de l'arbre de sortie 109 est utilisée par le dispositif de détermination de la position angulaire du rotor 25 pour déterminer la position du rotor 15.

La position angulaire du rotor 15 ainsi déterminée est ensuite transmise par le dispositif de détermination de la position angulaire du rotor 25 vers l'unité de commande 21 pour permettre la détermination des instants de commutation de l'onduleur 19.

### A) Premier mode de réalisation : capteur de position angulaire de sortie 110 de l'arbre de sortie 109 seul

En se référant aux figures 2 et 3b, selon un premier mode de réalisation, seul le capteur de position angulaire de sortie 110 de l'arbre de sortie 109 est utilisé par le dispositif 25 de détermination de la position angulaire du rotor 15, ceci notamment pour déterminer la position du rotor 15 pour les vitesses de rotation faibles, c'est-à-dire inférieures à un seuil prédéterminé, par exemple pour des vitesses inférieures à 10 % de la vitesse maximale du moteur. Il s'agit ici de la phase de démarrage du moteur électrique à courant continu sans balais 3.

Pour les vitesses de rotation égales ou supérieures au seuil prédéterminé, c'est-à-dire après la phase de démarrage, le dispositif 25 de détermination de la position angulaire du rotor 15 peut déterminer la position angulaire du rotor 15 à partir des forces contre électromotrices mesurées au niveau des bobines d'excitation électromagnétiques 17.

La force contre électro-motrice est mesurée au niveau d'une bobine non alimentée. Par exemple dans le cas de l'étape 1 de la figure 3c, le courant est transmis de la phase A vers la phase B de sorte que la force contre électromotrice est mesurée au niveau de la bobine d'excitation électromagnétique 17 associée à la phase C. La mesure de la force contre électromotrice est ensuite transmise au dispositif 25 de détermination de la position angulaire du rotor 15.

Le dispositif 25 de détermination de la position angulaire du rotor 15 compare alors la valeur de la force contre électromotrice mesurée à un seuil prédéterminé associé à une position prédéterminée du rotor 15. Par exemple, dans le cas d'une alimentation symétrique, l'instant de commutation correspond au passage à zéro (passage d'un niveau positif à un niveau négatif ou l'inverse) de la valeur de tension de la force contre-électromotrice aux bornes de la bobine d'excitation électromagnétique 17 non alimentée.

De plus, les forces contre électromotrices mesurées sont utilisées pour corriger voire étalonner le capteur de position angulaire de sortie 110, c'est-à-dire pour adapter, si cela est nécessaire, la valeur de l'angle fourni par le capteur de position angulaire de sortie 110 en cas de dérive de ce dernier.

La précision fournie par le capteur de position angulaire 110 de l'arbre de sortie 109 est ainsi améliorée et peut ainsi suffire pour déterminer la position angulaire du rotor 15 pour les faibles vitesses de rotation de sorte que le moteur électrique 103 ne nécessite aucun capteur dédié à la mesure angulaire du rotor 15.

Selon une variante, on peut continuer à exploiter la position du rotor 15 déterminée à partir des signaux de mesure délivrés par le capteur de position angulaire de sortie 110 même pour les vitesses de rotation égales ou supérieures au seuil prédéterminé.

### B) Deuxième mode de réalisation : capteur de position angulaire de sortie 110 de l'arbre de sortie 109 combiné avec un unique capteur à effet Hall 27 selon une première configuration

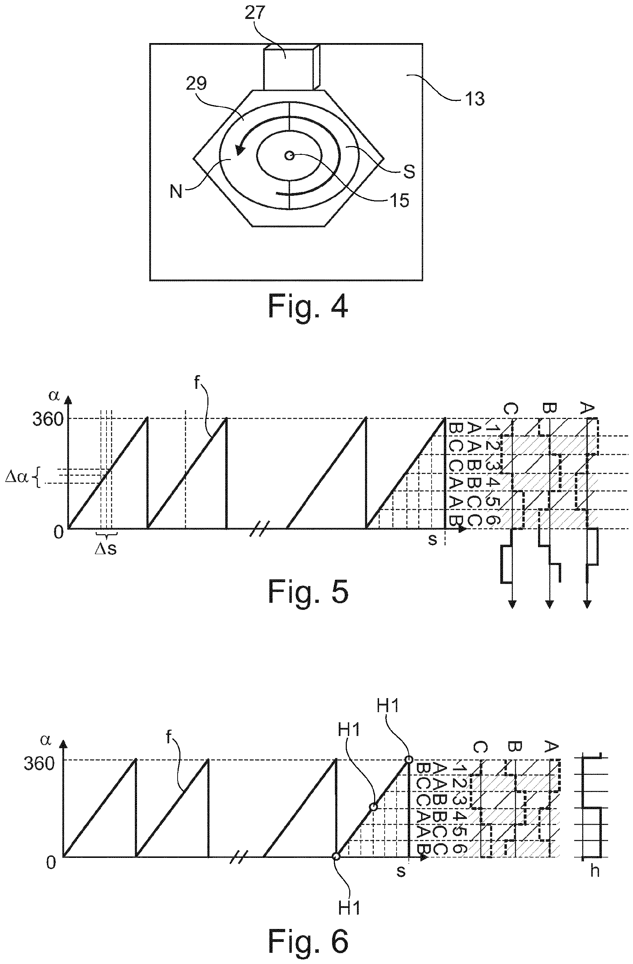

Selon un deuxième mode de réalisation, le moteur électrique 103 comprend également un unique capteur à effet Hall 27 disposé sur le stator 13 et associé à un aimant de commande 29 solidaire en rotation du rotor 15 comme représenté sur la figure 4.

L'aimant de commande 29 comporte le même nombre de pôles magnétiques que le rotor 15, c'est à dire deux dans le cas présent, un pôle magnétique Nord noté N et un pôle magnétique Sud noté S. De plus, les pôles magnétiques de l'aimant de commande 29 sont synchronisés avec les pôles magnétiques du rotor 15 de sorte que le signal issu du capteur à effet Hall 27 corresponde à un des changements de commutation des bobines d'excitation électromagnétique 17.

Le dispositif 25 de détermination de la position angulaire du rotor 15 est connecté au capteur à effet Hall 27. Le signal reçu du capteur à effet Hall 27 permet au dispositif 25 de détermination de la position angulaire du rotor 15 de détecter de façon précise la position du rotor 15 tous les 180°.

Le dispositif 25 de détermination de la position angulaire du rotor 15 peut donc combiner les signaux issus du capteur de position angulaire de sortie 110 et ceux du capteur à effet Hall 27 pour déterminer la position angulaire du rotor 15.

Dans ce cas, le signal du capteur à effet Hall 27 est en particulier utilisé pour corriger, voire étalonner la mesure angulaire issue du capteur de position angulaire de sortie 110 notamment en cas de dérive de ce dernier.

La figure 5 est un graphique d'une courbe f représentant la position angulaire α du rotor 15 en fonction du signal du signal de sortie s du capteur de position angulaire de sortie 110. La courbe f a une forme générale en dent de scie et varie entre une valeur minimale de 0° et une valeur maximale de 360°. La figure 5 représente également sur sa partie droite et selon une rotation de 90° dans le sens horaire, les six étapes de commutation des phases A, B et C en fonction de la position du rotor 15. Il est à noter que l'ordre des étapes est inversé par rapport au cycle de la figure 3c, l'ordre des étapes dépendant du sens de rotation désiré pour le rotor 15.

Ainsi, une erreur de mesure As au niveau du signal de sortie s capteur de position angulaire de sortie 110 produit une erreur Δα sur l'estimation de la position angulaire du rotor 15 et donc sur les instants de commutation associés (correspondant aux multiples de 60°).

L'utilisation du capteur à effet Hall 27 permet d'obtenir un signal de référence pour certains angles prédéterminés, ici les angles 0° (ou 360°) et 180°, ce qui permet de corriger la position angulaire du rotor 15 obtenue à partir du capteur de position angulaire de sortie 110. Le capteur à effet Hall 27 permet ainsi de corriger ou d'étalonner le capteur de position angulaire 110 de l'arbre de sortie 109.

La figure 6 reprend le graphique de la figure 5 sur lequel est représenté sur la partie droite le signal h issu du capteur à effet Hall 27. Les changements d'état du capteur à effet Hall 27 sont reportés au niveau d'une portion de la courbe f du signal s issu du capteur de position angulaire 110 de l'arbre de sortie 109. Ces changements d'état correspondent aux angles 0, 180 et 360°, correspondant à des changements de commutation des bobines d'excitation électromagnétique 17 et sont représentés au niveau du signal s par les points H1.

Ainsi, le capteur à effet Hall 27 permet de corriger la position angulaire du rotor 15 pour ces angles.

De plus, comme pour le premier mode de réalisation, pour des vitesses de rotation supérieures à un seuil prédéterminé, les forces contre électromotrices mesurées au niveau des bobines d'excitation électromagnétique 17 peuvent être utilisées par le dispositif 25 de détermination de la position angulaire du rotor 15 pour déterminer la position de ce dernier. Les forces contre électromotrices mesurées peuvent également être utilisées pour corriger le signal obtenu à partir du capteur de position angulaire 110 et du capteur à effet Hall 27 ou pour corriger ou étalonner le capteur de position angulaire de sortie 110 et/ou le capteur à effet Hall 27.

La position du rotor 15 déterminée par le dispositif 25 de détermination de la position angulaire du rotor 15 est transmise à l'unité de commande 21. L'unité de commande 21 est configurée pour commander l'alimentation des bobines d'excitation électromagnétique 17 via l'onduleur 19 à partir de la position du rotor 15 déterminée.

En pratique, le dispositif 25 de détermination de la position angulaire du rotor 15 et l'unité de commande 21 peuvent être combinés dans un équipement unique, par exemple un microprocesseur, un microcontrôleur, un ASIC (un circuit intégré spécifique à une application) ou tout autre moyen de traitement adapté connu de l'homme du métier.

Ainsi, l'utilisation d'un unique capteur à effet Hall 27 permet d'obtenir un signal dont le changement d'état correspond à des positions précises et prédéterminées du rotor 15, ces positions prédéterminées étant configurées pour correspondre avec certains des angles pour lesquels des commutations doivent être réalisées au niveau de l'alimentation des bobines d'excitation électromagnétiques 17.

De plus, le signal h issu du capteur à effet Hall 27 permet de corriger la valeur de la position du rotor 15 estimée à partir du signal s issu du capteur de position angulaire de sortie 110 de l'arbre de sortie 109.

Alternativement, le capteur à effet Hall 27 pourrait être utilisé seulement pour étalonner le capteur de position angulaire de sortie 110 (dans ce cas, les pôles magnétiques de l'aimant de commande 29 n'ont pas besoin d'être synchronisés avec les pôles magnétiques du rotor 15 mais il faudrait seulement connaître les angles correspondant à un changement d'état du capteur à effet Hall 27).

Les forces contre électromotrices mesurées peuvent également être utilisées pour déterminer la position du rotor 15 et pour corriger et/ou pour étalonner le capteur de position angulaire de sortie 110 et/ou le capteur à effet Hall 27.

De plus, il est à noter que l'exemple représenté pour les différents modes de réalisation correspond à un moteur à deux pôles et un rapport de réduction unitaire mais la présente invention ne se limite pas à un tel exemple mais s'étend à d'autres configurations ayant un nombre de pôles et un rapport de réduction différents.

### C) Troisième mode de réalisation : capteur de position angulaire de sortie 110 de l'arbre de sortie 109 combiné avec un unique capteur à effet Hall 27 selon une deuxième configuration

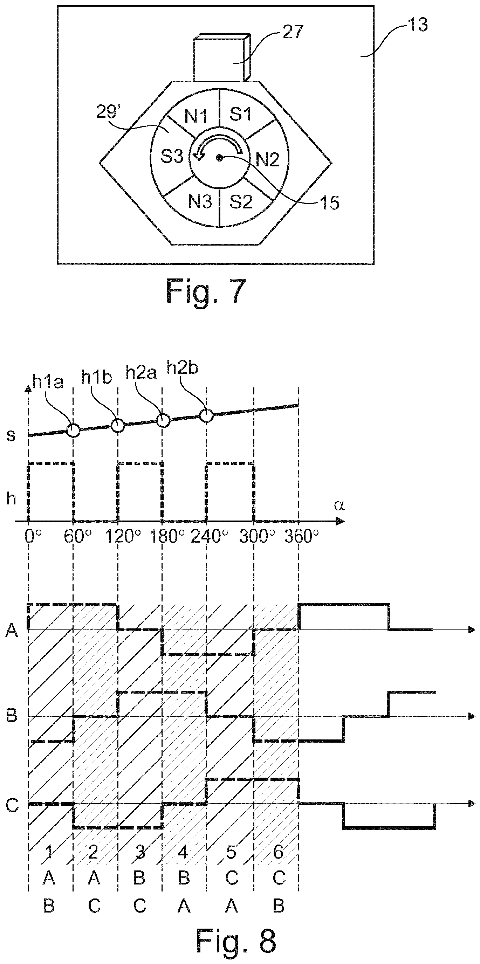

Selon un troisième mode de réalisation illustré sur les figures 7 et 8, le moteur électrique 103 comprend un unique capteur à effet Hall 27 comme pour le deuxième mode de réalisation mais l'aimant de commande 29' associé possède un nombre de pôles magnétiques égal par exemple à trois fois le nombre de pôles magnétiques du rotor 15. Dans le cas présent, le nombre de pôles de l'aimant de commande 29' comprend donc six pôles magnétiques notés Ni, N2 et N3 pour les pôles nord et Si, S2 et S3 pour les pôles sud comme représenté sur la figure 7. Chaque pôle magnétique de l'aimant de commande 29' occupe une section angulaire de 60°.

Le moteur électrique 3 est par ailleurs similaire au deuxième mode de réalisation et seules les différences de fonctionnement vont maintenant être décrites.

Du fait des six pôles magnétiques de l'aimant de commande 29', le capteur à effet Hall 27 peut détecter une position angulaire précise du rotor tous les 60°. Le moteur électrique 103 est donc configuré de sorte que les changements d'état du signal fournis par l'unique capteur à effet Hall 27 correspondent aux changements de commutation de l'onduleur 19 comme représenté sur le graphique de la figure 8.

En effet, la figure 8 représente dans sa partie haute, le signal h issu du capteur à effet Hall 27 en fonction de la position angulaire du rotor 15 et la position s du rotor 15 calculée à partir du signal du capteur de position angulaire de sortie 110.

Quatre changements d'état successifs du capteur à effet Hall 27 sont reportés au niveau du signal s issu du capteur de position angulaire de sortie 110 et représentés par les points h1a, h1b, h2a et h2b qui sont donc espacés de 60° (positions 60°, 120° 180° et 240°).

Les six étapes correspondant au cycle de commutation des bobines d'excitation électromagnétique 17 sont également représentées sur la partie inférieure de la figure 8.

Les changements d'état du signal issu du capteur à effet Hall 27 permettent donc d'une part de déterminer les instants auxquels les changements de commutation de l'onduleur 19 doivent être opérés et d'autre part d'étalonner ou de corriger la position angulaire déterminée à l'aide du capteur de position angulaire de sortie 110.

Ce mode de réalisation permet de commander le moteur électrique 3 lorsque l'estimation de la position du rotor 15 déterminée à partir d'une mesure du capteur de position angulaire 110 de l'arbre de sortie 109 a une erreur allant jusqu'à +/-60°. En effet, les changements d'état (du niveau bas au niveau haut (à 120 et 240°) ou du niveau haut au niveau bas (à 60° et 180°) se produisent tous les 120° (ce qui signifie qu'une erreur inférieure à ± 120° du capteur de position angulaire 110 permet de différencier deux changements d'état). Cependant, lors d'un démarrage, il est nécessaire de connaître la position avant le changement d'état du signal h (dans le cas de la figure 8, si on est au niveau bas, il est nécessaire de savoir si on se trouve entre les points h1a et h1b c'est-à-dire entre 60 et 120° ou si on se trouve entre les points h2a et h2b c'est-à-dire entre 180 et 240°), il faut donc que le capteur de sortie ait une erreur inférieure à ± 60° pour pouvoir réaliser cette détermination.

Alternativement, le capteur à effet Hall 27 pourrait être utilisé seulement pour étalonner le capteur de position angulaire de sortie 110 (dans ce cas, les pôles magnétiques de l'aimant de commande 29' n'ont pas besoin d'être synchronisés avec les pôles magnétiques du rotor 15 mais il faudrait seulement connaître les angles correspondant à un changement d'état du capteur à effet Hall 27).

Les forces contre électromotrices mesurées peuvent également être utilisées pour déterminer la position du rotor 15 et pour corriger et/ou pour étalonner le capteur de position angulaire de sortie 110 et/ou le capteur à effet Hall 27.

### D) Quatrième mode de réalisation : capteur de position angulaire de sortie 110 de l'arbre de sortie 109 combiné avec deux capteurs à effet Hall 27a et 27b selon une première configuration

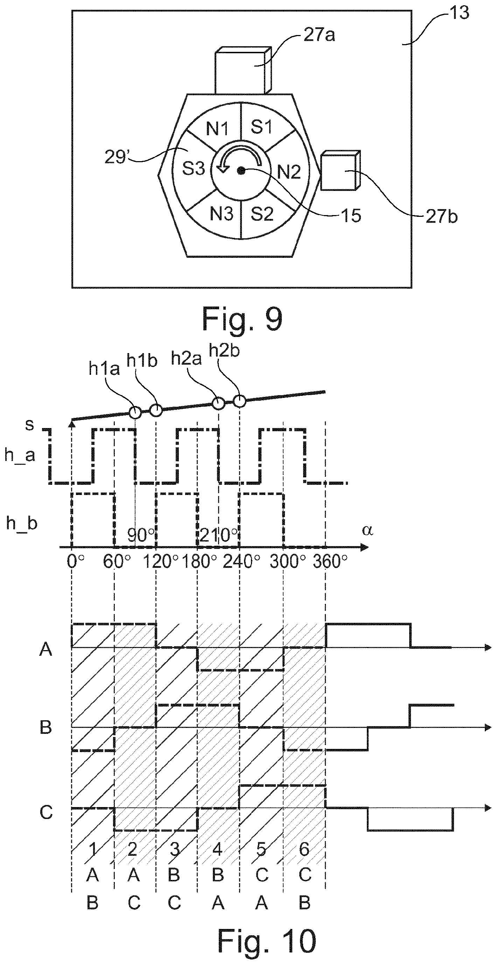

Selon un quatrième mode de réalisation illustré sur les figures 9 et 10, le moteur électrique 103 comprend deux capteurs à effet Hall 27a et 27b associés à un aimant de commande 29' dont le nombre de pôles magnétiques est égal à trois fois le nombre de pôles magnétiques du rotor 15 et similaire à l'aimant de commande 29' du troisième mode de réalisation.

Dans le cas présent, le nombre de pôles de l'aimant de commande 29' comprend donc six pôles magnétiques comme représenté sur la figure 9. Les deux capteurs à effet Hall 27a et 27b sont par exemple disposés autour du rotor 15 et décalés d'une position angulaire telle que les signaux issus des deux capteurs à effet Hall 27a et 27b sont décalés d'un quart de période, dans notre cas les capteurs à effet Hall 27a et 27b peuvent être décalés de 30°, 90° ou 150°. Bien entendu, d'autres angles (différents d'un multiple de 60°) peuvent également être utilisés sans sortir du cadre de la présente invention.

Le moteur électrique 103 est par ailleurs similaire au deuxième mode de réalisation et seules les différences de fonctionnement vont maintenant être décrites.

Le moteur électrique 103 est configuré de sorte que les changements d'état du signal fourni par l'un des deux capteurs à effet Hall 27a ou 27b, par exemple le capteur 27b, correspondent aux changements de commutation de l'onduleur 19 comme représenté sur le graphique de la figure 10.

Deux changements d'état de chacun du capteur à effet Hall 27b sont reportés au niveau du signal s issu du capteur de position angulaire 110 de l'arbre de sortie 109 et représentés par les points h1a, h1b, h2a et h2b qui sont positionnés à 60° 120°, 180° et 240°). Les deux capteurs à effet Hall 27a et 27b disposés à 90° permettent donc d'obtenir une détection de la position du rotor 15 tous les 30°. On a quatre états possibles : les deux signaux au niveau bas, les deux signaux au niveau haut, le signal h_a au niveau bas et le signal h_b au niveau haut et enfin le signal h_a au niveau haut et signal h_b au niveau bas. Du fait, du décalage de 30° entre les deux signaux, on a un écart de 90° entre deux états identiques successifs.

Les six étapes correspondant au cycle de commutation des bobines d'excitation électromagnétique 17 sont également représentées sur la partie basse de la figure 10.

Ainsi, l'un des capteurs à effet Hall, par exemple le capteur 27b, permet de fournir les instants de changements de commutation de l'onduleur 19 comme dans le troisième mode de réalisation et l'autre capteur à effet Hall, par exemple le capteur 27a, permet d'obtenir le sens de rotation du rotor 15.

De plus, il est possible d'augmenter la précision avec laquelle la position du rotor 15 est déterminée. En effet, comme pour le troisième mode de réalisation, les signaux issus des capteurs à effet Hall 27a et 27b peuvent être utilisés pour corriger et/ou étalonner le capteur de position angulaire de sortie 110.

Les forces contre électromotrices mesurées peuvent également être utilisées pour déterminer la position du rotor 15 et pour corriger et/ou pour étalonner le capteur de position angulaire de sortie 110 et/ou les capteurs à effet Hall 27a et 27b.

Ce mode de réalisation permet de commander le moteur électrique 103 lorsque l'estimation de la position du rotor 15 déterminée à partir d'une mesure du capteur de position angulaire 110 de l'arbre de sortie 109 atteint une erreur allant jusqu'à +/-90°.

En effet, deux changements d'état identiques (passage d'un niveau haut à un niveau bas ou passage d'un niveau bas à un niveau haut) d'un capteur à effet Hall 27a ou 27b se produisent tous les 120° par exemple entre les points h1a et h2a ou les points h1b et h2b (ce qui signifie qu'une erreur inférieure à ± 120° du capteur de position angulaire 110 permet de différencier deux changements d'état).

Cependant, lors d'un démarrage, il est nécessaire de connaître la position avant le changement d'état (dans le cas de la figure 10, si on est au niveau bas pour les deux signaux h_a et h_b, il est nécessaire de savoir si on se trouve entre les points h1a et h1b c'est à dire entre 90° et 120° ou si on se trouve entre les points h2a et h2b c'est-à-dire entre 210° et 240°), il faut donc que la capteur de sortie ait une erreur inférieure à ± 90° pour pouvoir réaliser cette détermination.

Alternativement, les capteurs à effet Hall 27a et 27b pourraient être utilisés seulement pour étalonner le capteur de position angulaire de sortie 110 (dans ce cas, les pôles magnétiques de l'aimant de commande 29' n'ont pas besoin d'être synchronisés avec les pôles magnétiques du rotor 15 mais il faudrait seulement connaître les angles correspondant à un changement d'état des capteurs à effet Hall 27a et 27b).

### E) Cinquième mode de réalisation : capteur de position angulaire de sortie 110 de l'arbre de sortie 109 combiné avec deux capteurs à effet Hall 27a et 27b selon une deuxième configuration.

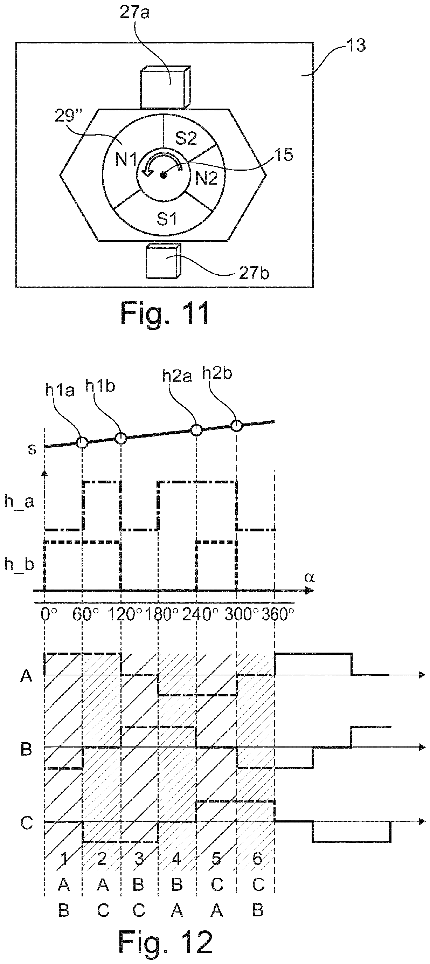

Selon un cinquième mode de réalisation illustré sur les figures 11 et 12, le moteur électrique 103 comprend deux capteurs à effet Hall 27a et 27b associés à un aimant de commande 29" comprenant quatre pôles magnétiques, ce qui correspond à quatre fois le nombre de paires de pôles du moteur.

De plus, les pôles magnétiques ont une répartition angulaire asymétrique sur l'aimant de commande 29". Par exemple un premier pôle Nord N1 et un premier pôle Sud S1 s'étalent chacun sur une section angulaire de 120° tandis qu'un deuxième pôle Nord N2 et un deuxième pôle Sud S2 s'étalent chacun sur une section angulaire de 60°.

Les capteurs à effet Hall 27a et 27b sont par exemple disposés à 180° l'un de l'autre autour de l'axe du rotor 15 (d'autres angles peuvent également être utilisés comme 60°, cependant, il est nécessaire d'avoir une commutation tous les 60°).

Le moteur électrique 103 est par ailleurs similaire au deuxième mode de réalisation et seules les différences de fonctionnement vont maintenant être décrites.

Le moteur électrique 103 est configuré de sorte que les changements d'état du signal fourni par les capteurs à effet Hall 27a et 27b correspondent aux changements de commutation de l'onduleur 19 comme représenté sur le graphique de la figure 12.

Deux changements d'état de chacun des capteurs à effet Hall 27a et 27b sont reportés au niveau du signal s issu du capteur de position angulaire de sortie 110 de l'arbre de sortie 109 et représentés par les points h1a h1b, h2a et h2b qui sont positionnés à 60°, 120°, 240° et 300°). Les deux capteurs à effet Hall 27a et 27b disposés à 180° permettent donc d'obtenir une détection de la position du rotor 15 tous les 60°.

Les six étapes correspondant au cycle de commutation des bobines d'excitation électromagnétique 17 sont également représentées sur la partie basse de la figure 12.

Comme pour le quatrième mode de réalisation, les signaux issus des capteurs à effet Hall 27a et 27b sont utilisés pour corriger et/ou étalonner le capteur de position angulaire de sortie 110. Les forces contre électromotrices mesurées peuvent également être utilisées pour déterminer la position du rotor 15 et pour corriger et/ou étalonner le capteur de position angulaire de sortie 110 et/ou les capteurs à effet Hall 27a et 27b.

Ce mode de réalisation permet de commander le moteur électrique 103 lorsque l'estimation de la position du rotor 15 déterminée à partir d'une mesure du capteur de position angulaire 110 de l'arbre de sortie 109 atteint une erreur allant jusqu'à +/-120°. En effet, deux positions identiques des signaux h_a et h_b des capteurs 27a et 27b sont séparés de 120°. Par exemple, les deux signaux h_a et h_b sont au niveau haut entre les points h1a et h1b, c'est-à-dire entre 60° et 120° puis entre les points h2a et h2b, c'est-à-dire entre 240° et 300°. Ainsi, pour déterminer au démarrage si on se trouve entre 60° et 120° ou entre 240° et 300°, il suffit d'utiliser un capteur de position angulaire 110 dont l'erreur est inférieure à 120°. Une telle configuration permet donc d'utiliser un capteur de position angulaire 110 de faible précision et donc de faible coût.

Alternativement, les capteurs à effet Hall 27a et 27b pourraient être utilisés seulement pour étalonner le capteur de position angulaire de sortie 110 (dans ce cas, les pôles magnétiques de l'aimant de commande 29" n'ont pas besoin d'être synchronisés avec les pôles magnétiques du rotor 15 mais il faudrait seulement connaître les angles correspondant à un changement d'état des capteurs à effet Hall 27a et 27b).

### F) Sixième mode de réalisation : capteur de position angulaire de sortie 110 de l'arbre de sortie 109 combiné avec deux capteurs à effet Hall 27a et 27b selon une troisième configuration

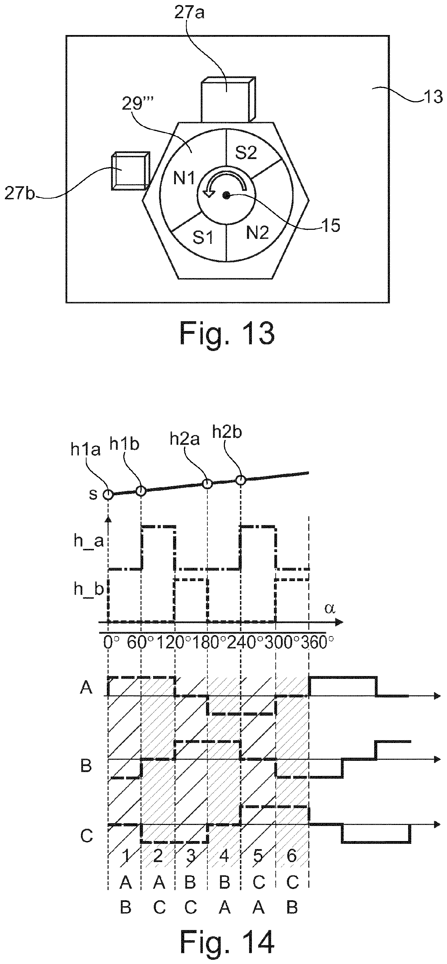

Selon un sixième mode de réalisation illustré sur les figures 13 et 14, le moteur électrique 103 comprend deux capteurs à effet Hall 27a et 27b associés à un aimant de commande 29''' comprenant quatre pôles magnétiques comme représenté sur la figure 13 ce qui correspond à quatre fois le nombre de paires de pôles du rotor 15.

Les pôles magnétiques de l'aimant de commande 29''' ont une répartition en alternance, mais les pôles magnétiques Nord N1 et N2 s'étalent chacun sur une section angulaire de 120° tandis que les pôles magnétiques Sud S1 et S2 s'étalent sur une section angulaire de 60°.

Les capteurs à effet Hall 27a et 27b sont par exemple disposés à 60° l'un de l'autre autour de l'axe du rotor 15 (d'autres angles peuvent également être utilisés).

Le moteur électrique 103 est par ailleurs similaire au deuxième mode de réalisation et seules les différences de fonctionnement vont maintenant être décrites.

Le moteur électrique 103 est configuré de sorte que les changements d'état du signal fourni par les capteurs à effet Hall 27a et 27b correspondent aux changements de commutation de l'onduleur 19 comme représenté sur le graphique de la figure 14.

Deux changements d'état de chacun des capteurs à effet Hall 27a et 27b sont reportés au niveau du signal s issu du capteur de position angulaire 110 de l'arbre de sortie 9 et représentés par les points h1a, h1b, h2a et h2b qui sont positionnés à 0°, 60°, 180° et 240°. Les deux capteurs à effet Hall 27a et 27b disposés à 60° permettent donc d'obtenir une détection de la position du rotor 15 tous les 60°. De plus, deux positions identiques des signaux h_a et h_b des capteurs 27a et 27b sont séparés de 120°. Par exemple, les deux signaux h_a et h_b sont au niveau bas entre les points h1a et h1b, c'est-à-dire entre 0° et 60° puis entre les points h2a et h2b, c'est-à-dire entre 180° et 240°. Ainsi, pour déterminer au démarrage si on se trouve entre 0° et 60° ou entre 180° et 240°, il suffit d'utiliser un capteur de position angulaire 110 dont l'erreur est inférieure à 120°. Une telle configuration permet donc également d'utiliser un capteur de position angulaire 110 de faible précision et donc de faible coût.

Les six étapes correspondant au cycle de commutation des bobines d'excitation électromagnétique 17 sont également représentées sur la partie inférieure de la figure 14.

Comme pour le quatrième mode de réalisation, les signaux issus des capteurs à effet Hall 27a et 27b sont utilisés pour étalonner le capteur de position angulaire de sortie 110. Les forces contre électromotrices mesurées peuvent également être utilisées pour déterminer la position du rotor 15 et pour corriger et/ou étalonner le capteur de position angulaire de sortie 110 et/ou les capteurs à effet Hall 27a et 27b.

Ce mode de réalisation permet de commander le moteur électrique 103 lorsque l'estimation de la position du rotor 15 déterminée à partir d'une mesure du capteur de position angulaire 110 de l'arbre de sortie 109 atteint une erreur allant jusqu'à +/-120°.

Alternativement, les capteurs à effet Hall 27a et 27b pourraient être utilisés seulement pour étalonner le capteur de position angulaire de sortie 110 (dans ce cas, les pôles magnétiques de l'aimant de commande 29''' n'ont pas besoin d'être synchronisés avec les pôles magnétiques du rotor 15 mais il faudrait seulement connaître les angles correspondant à un changement d'état des capteurs à effet Hall 27a et 27b).

D'autres modes de réalisation comprenant un ou deux capteurs à effet Hall 27, 27a, 27b associés à un aimant de commande 29, 29', 29", 29''' comprenant un nombre de pôles magnétiques plus ou moins grand sont également envisageables dans le cadre de la présente invention. Les capteurs à effet Hall 27, 27a, 27b permettant de déterminer les instants de commutation de l'onduleur 19 et/ou d'étalonner le capteur de position angulaire de sortie 110 de l'arbre de sortie 109.

Ainsi, l'utilisation du signal fourni par un capteur de position angulaire 110 de l'arbre de sortie 109 d'un moto-réducteur 101 pour estimer la position du rotor 15 afin de commander l'alimentation des bobines d'excitation électromagnétique 17 du moteur électrique 103 du moto-réducteur 101 permet de réduire le nombre de capteurs dédiés nécessaires à la détermination de la position angulaire du rotor 15 et ainsi de réduire le coût du moteur électrique 103. De plus, l'utilisation du capteur de position angulaire 110 de l'arbre de sortie 109 permet d'estimer la position du rotor 15 pour des vitesses de rotation faibles et peut donc être combinée à une technique sans capteur (« sensorless ») basée sur la mesure des forces contre électromotrices au niveau des bobines d'excitation électromagnétique 17 pour fournir un moteur électrique 103 de faible coût utilisable dans des applications nécessitant un démarrage à pleine charge comme par exemple un moto-réducteur 101 pour dispositif d'essuyage de véhicule automobile.

De plus, en fonction de la précision nécessaire dans la détermination de la position du rotor 15, différentes configurations nécessitant un ou deux capteurs à effet Hall 27, 27a, 27b peuvent être utilisés pour obtenir une estimation fiable de la position du rotor 15 en nécessitant moins de trois capteurs à effet Hall comme cela est le cas dans les réalisations de l'état de la technique.

D'autre part, les signaux des forces électromotrices peuvent alors être utilisées pour corriger ou étalonner les mesures réalisées par le capteur de position angulaire 110 de l'arbre de sortie 109 et/ou les capteurs à effet Hall 27, 27a et 27b lorsque ceux-ci sont utilisés.

## Revendications

1. Moto-réducteur (101), notamment pour un système d'essuyage, comprenant :
- un moteur électrique (103) à courant continu sans balais comportant :
- un rotor (15),
- un stator (13) présentant des bobines d'excitation électromagnétique du rotor,
- un dispositif (25) de détermination de la position angulaire du rotor (15) par rapport au stator (13),
- soit un unique capteur à effet Hall (27) soit deux capteurs à effet Hall (27a, 27b) décalés angulairement l'un par rapport à l'autre, le capteur ou les capteurs à effet Hall (27, 27a, 27b) étant associé(s) à un aimant de commande (29, 29', 29", 29''') solidaire en rotation au rotor (15), et connecté au dispositif (25) de détermination de la position angulaire du rotor (15),
- une unité de commande (21) configurée pour générer des signaux de commande pour alimenter les bobines d'excitation électromagnétique (17) du stator (13) en fonction de la position angulaire du rotor (15) déterminée par le dispositif (25) de détermination de la position angulaire du rotor (15),
- un mécanisme réducteur (104) relié d'un côté au rotor du moteur électrique (103) et de l'autre côté à un arbre de sortie (109) destiné à être relié à un mécanisme externe, notamment un système d'essuyage, le mécanisme réducteur (104) présentant un rapport de réduction prédéfini et,
- un capteur de position angulaire de sortie (110) configuré pour mesurer la position angulaire de l'arbre de sortie (109), est connecté au dispositif (25) de détermination de la position angulaire du rotor (15) et est configuré pour transmettre un signal correspondant à la position angulaire mesurée de l'arbre de sortie (109), **caractérisé en ce que** ledit dispositif (25) de détermination de la position angulaire du rotor (15) est configuré pour déterminer la position du rotor (15) par rapport au stator (13) à partir du signal transmis en prenant en compte le rapport de réduction prédéfini du mécanisme réducteur (104), et pour corriger la mesure angulaire issue du capteur de position angulaire de sortie (110) à partir du signal issu du capteur ou des capteurs à effet Hall (27, 27a, 27b).

2. Moto-réducteur (101) selon la revendication 1 dans lequel le dispositif (25) de détermination de la position angulaire du rotor (15) est configuré pour
- déterminer la position angulaire du rotor (15) à partir d'un signal issu du capteur de position angulaire de sortie (110) pour des vitesses de rotation du rotor inférieures à un seuil prédéterminé, et
- déterminer la position angulaire du rotor (15) à partir des signaux de forces contre-électromotrices issus des bobines d'excitation électromagnétique (17) du stator (13) pour des vitesses de rotation du rotor égales ou supérieures au seuil prédéterminé.

3. Moto-réducteur (101) selon la revendication 2 dans lequel la force contre-électromotrice de la, au moins une, bobine d'excitation électromagnétique (17) non alimentée est mesurée et transmise au dispositif (25) de détermination de la position angulaire du rotor (15), ledit dispositif (25) de détermination de la position angulaire du rotor (15) étant configuré pour comparer la valeur de la force contre-électromotrice à un seuil prédéterminé associé à une position prédéterminée du rotor (15).

4. Moto-réducteur (101) selon la revendication 3 dans lequel le dispositif (25) de détermination de la position angulaire du rotor (15) est configuré pour corriger la mesure angulaire issue du capteur de position angulaire de sortie (110) à partir des signaux de mesure des forces contre-électromotrices des bobines d'excitation électromagnétique (17) du stator (13).

5. Moto-réducteur (101) selon l'une des revendications précédentes dans lequel le dispositif (25) de détermination de la position angulaire du rotor (15) est configuré pour détecter un changement d'état du signal issu du capteur à effet Hall (27), ledit changement d'état étant associé à une position prédéterminée du rotor (15) et pour corriger la mesure issue du capteur de position angulaire de sortie (110) à partir de ladite détection du changement d'état.

6. Moto-réducteur (101) selon l'une des revendications précédentes dans lequel :
- le rotor (15) comprend un nombre de pôles magnétiques prédéterminé,
- l'aimant de commande (29, 29') comprend un nombre de pôles magnétiques égal ou supérieur au nombre de pôles magnétique du rotor (15) et,
- les pôles magnétiques de l'aimant de commande (29) sont en phase avec des pôles magnétiques du rotor (15) de sorte que l'envoi d'un signal de commande d'alimentation des bobines d'excitation électromagnétique (17) du stator (13) est synchronisé avec la détection d'un changement d'état du signal issu du capteur à effet Hall (27).

7. Moto-réducteur (101) selon l'une des revendications précédentes dans lequel le dispositif (25) de détermination de la position angulaire du rotor (15) est configuré pour
- déterminer la position angulaire du rotor (15) à partir des signaux issus d'une part du ou des capteurs à effet Hall et d'autre part du capteur de position angulaire de sortie (110) pour des vitesses de rotation du rotor inférieures à un seuil prédéterminé, et
- déterminer la position angulaire du rotor (15) à partir des signaux de forces contre-électromotrices issus des bobines d'excitation électromagnétique (17) du stator (13) pour des vitesses de rotation du rotor égales ou supérieures au seuil prédéterminé,
et dans lequel le dispositif (25) de détermination de la position angulaire du rotor (15) est configuré pour corriger la mesure angulaire issue du ou des capteurs à effet Hall et/ou du capteur de position angulaire de sortie (110) à partir des signaux de mesure des forces contre-électromotrices des bobines d'excitation électromagnétique (17) du stator (13).

8. Système d'essuyage, notamment pour véhicule automobile comprenant un moto-réducteur (1) selon l'une des revendications précédentes.

9. Procédé de commande d'un moteur électrique (103) d'un moto-réducteur (101), notamment pour systèmes d'essuyage, le moto-réducteur (101) comprenant :
- un moteur électrique (103) à courant continu sans balais comprenant :
- un rotor (15),
- un stator (13) présentant des bobines d'excitation électromagnétique (17) du rotor (15),
- un mécanisme réducteur (104) relié d'un côté au rotor du moteur électrique (103) et de l'autre côté à un arbre de sortie (109) destiné à être relié à un mécanisme externe, notamment un système d'essuyage, le mécanisme réducteur (109) présentant un rapport de réduction prédéfini et,
- un capteur de position angulaire de sortie (110) configuré pour mesurer la position angulaire de l'arbre de sortie (109),
- un unique ou deux capteurs à effet Hall (27, 27a, 27b) associé(s) à un aimant de commande (29, 29', 29", 29''') solidaire en rotation du rotor (15),
ledit procédé comprenant les étapes suivantes :
(a) pour des vitesses de rotation du rotor inférieures à un seuil prédéterminé :
- on détermine la position angulaire du rotor (15) à partir du capteur de position angulaire de l'arbre de sortie (109) en prenant en compte le rapport de réduction du mécanisme réducteur (104) et on corrige la mesure angulaire issue du capteur de position angulaire de sortie (110) à partir du signal issu du ou des capteurs à effet Hall (27, 27a, 27b) ou à partir des signaux de force contre électromotrices,
(b) pour des vitesses de rotation du rotor égales ou supérieures au seuil prédéterminé,
- on détermine la position angulaire du rotor (15) à partir des signaux de forces contre-électromotrices issus des bobines d'excitation électromagnétique (17) du stator (13),
- on génère des signaux de commande pour alimenter les bobines d'excitation électromagnétique (17) du stator (13) en fonction de la position angulaire du rotor (15) déterminée lors des étapes précédentes.

10. Procédé de commande d'un moteur électrique (103) d'un moto-réducteur (101) selon la revendication précédente, dans lequel on corrige la mesure angulaire issue du capteur de position angulaire de sortie (110) et du ou des capteurs à effet Hall (27, 27a, 27b) à partir des signaux de force contre électromotrices.

## Patentansprüche

1. Getriebemotor (101), insbesondere für ein Wischersystem, welcher umfasst:
- einen bürstenlosen Gleichstrom-Elektromotor (103), welcher umfasst:
- einen Rotor (15),
- einen Stator (13), der Spulen zur elektromagnetischen Erregung des Rotors aufweist,
- eine Vorrichtung (25) zur Bestimmung der Winkelposition des Rotors (15) in Bezug auf den Stator (13),
- entweder einen einzigen Hall-Sensor (27) oder zwei winkelmäßig zueinander versetzte Hall-Sensoren (27a, 27b), wobei der Hall-Sensor oder die Hall-Sensoren (27, 27a, 27b) einem Steuermagneten (29, 29', 29", 29''') zugeordnet ist (sind), der mit dem Rotor (15) drehfest verbunden ist und mit der Vorrichtung (25) zur Bestimmung der Winkelposition des Rotors (15) verbunden ist,
- eine Steuereinheit (21), die dafür ausgelegt ist, Steuersignale zum Speisen der elektromagnetischen Feldspulen (17) des Stators (13) in Abhängigkeit von der Winkelposition des Rotors (15), die von der Vorrichtung (25) zur Bestimmung der Winkelposition des Rotors (15) bestimmt wurde, zu erzeugen,
- einen Untersetzungsmechanismus (104), der einerseits mit dem Rotor des Elektromotors (103) verbunden ist, und andererseits mit einer Ausgangswelle (109), die dazu bestimmt ist, mit einem externen Mechanismus, insbesondere einem Wischersystem, verbunden zu werden, wobei der Untersetzungsmechanismus (104) ein vordefiniertes Untersetzungsverhältnis aufweist, und
- einen Ausgangs-Winkelpositionssensor (110), der dafür ausgelegt ist, die Winkelposition der Ausgangswelle (109) zu messen, mit der Vorrichtung (25) zur Bestimmung der Winkelposition des Rotors (15) verbunden ist und dafür ausgelegt ist, ein der gemessenen Winkelposition der Ausgangswelle (109) entsprechendes Signal zu übertragen,
**dadurch gekennzeichnet, dass** die Vorrichtung (25) zur Bestimmung der Winkelposition des Rotors (15) dafür ausgelegt ist, die Position des Rotors (15) in Bezug auf den Stator (13) aus dem übertragenen Signal unter Berücksichtigung des vordefinierten Untersetzungsverhältnisses des Untersetzungsmechanismus (104) zu bestimmen und den Winkelmesswert von dem Ausgangs-Winkelpositionssensor (110) anhand des Signals von dem Hall-Sensor oder den Hall-Sensoren (27, 27a, 27b) zu korrigieren.

2. Getriebemotor (101) nach Anspruch 1, wobei die Vorrichtung (25) zur Bestimmung der Winkelposition des Rotors (15) ausgelegt ist zum
- Bestimmen der Winkelposition des Rotors (15) aus einem Signal von dem Ausgangs-Winkelpositionssensor (110) für Drehzahlen des Rotors, die niedriger als ein vorbestimmter Schwellenwert sind, und
- Bestimmen der Winkelposition des Rotors (15) aus den Signalen von gegenelektromotorischen Kräften von den elektromagnetischen Feldspulen (17) des Stators (13) für Drehzahlen des Rotors, die größer oder gleich dem vorbestimmter Schwellenwert sind.

3. Getriebemotor (101) nach Anspruch 2, wobei die gegenelektromotorische Kraft der wenigstens einen nicht gespeisten elektromagnetischen Feldspule (17) gemessen und an die Vorrichtung (25) zur Bestimmung der Winkelposition des Rotors (15) übertragen wird, wobei die Vorrichtung (25) zur Bestimmung der Winkelposition des Rotors (15) dafür ausgelegt ist, den Wert der gegenelektromotorischen Kraft mit einem vorbestimmten Schwellenwert zu vergleichen, der einer vorbestimmten Position des Rotors (15) zugeordnet ist.

4. Getriebemotor (101) nach Anspruch 3, wobei die Vorrichtung (25) zur Bestimmung der Winkelposition des Rotors (15) dafür ausgelegt ist, den Winkelmesswert von dem Ausgangs-Winkelpositionssensor (110) anhand der Messsignale der gegenelektromotorischen Kräfte der elektromagnetischen Feldspulen (17) des Stators (13) zu korrigieren.

5. Getriebemotor (101) nach einem der vorhergehenden Ansprüche, wobei die Vorrichtung (25) zur Bestimmung der Winkelposition des Rotors (15) dafür ausgelegt ist, eine Zustandsänderung des Signals von dem Hall-Sensor (27) zu erkennen, wobei die Zustandsänderung einer vorbestimmten Position des Rotor (15) zugeordnet ist, und den Messwert von dem Ausgangs-Winkelpositionssensor (110) anhand der Erkennung der Zustandsänderung zu korrigieren.

6. Getriebemotor (101) nach einem der vorhergehenden Ansprüche, wobei:
- der Rotor (15) eine vorbestimmte Anzahl von Magnetpolen umfasst,
- der Steuermagnet (29, 29') eine Anzahl von Magnetpolen umfasst, die größer oder gleich der Anzahl der Magnetpole des Rotors (15) ist, und
- die Magnetpole des Steuermagneten (29) in Phase mit Magnetpolen des Rotors (15) sind, so dass das Senden eines Steuersignals zur Speisung der elektromagnetischen Feldspulen (17) des Stators (13) mit der Erkennung einer Zustandsänderung des Signals von dem Hall-Sensor (27) synchronisiert ist.

7. Getriebemotor (101) nach einem der vorhergehenden Ansprüche, wobei die Vorrichtung (25) zur Bestimmung der Winkelposition des Rotors (15) ausgelegt ist zum
- Bestimmen der Winkelposition des Rotors (15) aus Signalen von einerseits dem oder den Hall-Sensoren und andererseits dem Ausgangs-Winkelpositionssensor (110) für Drehzahlen des Rotors, die niedriger als ein vorbestimmter Schwellenwert sind, und
- Bestimmen der Winkelposition des Rotors (15) aus den Signalen von gegenelektromotorischen Kräften von den elektromagnetischen Feldspulen (17) des Stators (13) für Drehzahlen des Rotors, die größer oder gleich dem vorbestimmter Schwellenwert sind,
und wobei die Vorrichtung (25) zur Bestimmung der Winkelposition des Rotors (15) dafür ausgelegt ist, den Winkelmesswert von dem oder den Hall-Sensoren und/oder von dem Ausgangs-Winkelpositionssensor (110) anhand der Messsignale der gegenelektromotorischen Kräfte der elektromagnetischen Feldspulen (17) des Stators (13) zu korrigieren.

8. Wischersystem, insbesondere für ein Kraftfahrzeug, welches einen Getriebemotor (1) nach einem der vorhergehenden Ansprüche umfasst.

9. Verfahren zur Steuerung eines Elektromotors (103) eines Getriebemotors (101), insbesondere für Wischersysteme, wobei der Getriebemotor (101) umfasst:
- einen bürstenlosen Gleichstrom-Elektromotor (103), welcher umfasst:
- einen Rotor (15),
- einen Stator (13), der Spulen zur elektromagnetischen Erregung (17) des Rotors (15) aufweist,
- einen Untersetzungsmechanismus (104), der einerseits mit dem Rotor des Elektromotors (103) verbunden ist, und andererseits mit einer Ausgangswelle (109), die dazu bestimmt ist, mit einem externen Mechanismus, insbesondere einem Wischersystem, verbunden zu werden, wobei der Untersetzungsmechanismus (109) ein vordefiniertes Untersetzungsverhältnis aufweist, und
- einen Ausgangs-Winkelpositionssensor (110), der dafür ausgelegt ist, die Winkelposition der Ausgangswelle (109) zu messen,
- einen einzigen oder zwei Hall-Sensoren (27, 27a, 27b), der (die) einem Steuermagneten (29, 29', 29", 29''') zugeordnet ist (sind), der mit dem Rotor (15) drehfest verbunden ist,
wobei das Verfahren die folgenden Schritte umfasst:
(a) für Drehzahlen des Rotors, die niedriger als ein vorbestimmter Schwellenwert sind:
- es wird die Winkelposition des Rotors (15) anhand des Winkelpositionssensors der Ausgangswelle (109) unter Berücksichtigung des Untersetzungsverhältnisses des Untersetzungsmechanismus (104) bestimmt, und es wird der Winkelmesswert von dem Ausgangs-Winkelpositionssensor (110) anhand des Signals von dem oder den Hall-Sensor (en) (27, 27a, 27b) oder anhand der Signale von gegenelektromotorischen Kräften korrigiert,
(b) für Drehzahlen des Rotors, die größer oder gleich dem vorbestimmten Schwellenwert sind:
- es wird die Winkelposition des Rotors (15) aus den Signalen von gegenelektromotorischen Kräften von den elektromagnetischen Feldspulen (17) des Stators (13) bestimmt,
- es werden Steuersignale zum Speisen der elektromagnetischen Feldspulen (17) des Stators (13) in Abhängigkeit von der Winkelposition des Rotors (15), die in den vorhergehenden Schritten bestimmt wurde, erzeugt.

10. Verfahren zur Steuerung eines Elektromotors (103) eines Getriebemotors (101) nach dem vorhergehenden Anspruch, wobei der Winkelmesswert von dem Ausgangs-Winkelpositionssensor (110) und von dem oder den Hall-Sensor(en) (27, 27a, 27b) anhand der Signale von gegenelektromotorischen Kräften korrigiert wird.

## Claims

1. A gear motor (101), in particular for a wiper system, comprising:
- a brushless direct current electric motor (103) comprising:
- a rotor (15),
- a stator (13) having electromagnetic excitation coils for the rotor,
- a device (25) for determining the angular position of the rotor (15) relative to the stator (13),
- either a single Hall effect sensor (27) or two Hall effect sensors (27a, 27b) angularly offset relative to one another, the Hall effect sensor or sensors (27, 27a, 27b) being associated with a control magnet (29, 29', 29", 29''') secured in rotation to the rotor (15), and connected to the device (25) for determining the angular position of the rotor (15),
- a control unit (21) configured to generate control signals for powering the electromagnetic excitation coils (17) of the stator (13) as a function of the angular position of the rotor (15) determined by the device (25) for determining the angular position of the rotor (15),
- a speed-reducing mechanism (104) linked on one side to the rotor of the electric motor (103) and on the other side to an output shaft (109) intended to be linked to an external mechanism, in particular a wiper system, the speed-reducing mechanism (104) having a predefined reduction ratio and,
- an output angular position sensor (110) configured to measure the angular position of the output shaft (109)connected to the device (25) for determining the angular position of the rotor (15) and is configured to transmit a signal corresponding to the measured angular position of the output shaft (109)
**characterized in that** said device (25) for determining the angular position of the rotor (15) is configured to determine the position of the rotor (15) relative to the stator (13) on the basis of the transmitted signal by taking into account the predefined reduction ratio of the speed-reducing mechanism (104), and to correct the angular measurement from the output angular position sensor (110) on the basis of the signal from the Hall effect sensor or sensors (27, 27a, 27b).

2. The gear motor (101) as claimed in claim 1, wherein the device (25) for determining the angular position of the rotor (15) is configured to
- determine the angular position of the rotor (15) on the basis of a signal from the output angular position sensor (110) for rotation speeds of the rotor below a predetermined threshold, and
- determine the angular position of the rotor (15) on the basis of the back-electromotive force signals from the electromagnetic excitation coils (17) of the stator (13) for rotation speeds of the rotor equal to or above the predetermined threshold.

3. The gear motor (101) as claimed in claim 2, wherein the back-electromotive force of the, at least one, non-powered electromagnetic excitation coil (17) is measured and transmitted to the device (25) for determining the angular position of the rotor (15), said device (25) for determining the angular position of the rotor (15) being configured to compare the value of the back-electromotive force to a predetermined threshold associated with a predetermined position of the rotor (15).

4. The gear motor (101) as claimed in claim 3, wherein the device (25) for determining the angular position of the rotor (15) is configured to correct the angular measurement from the output angular position sensor (110) from the signals measuring the back-electromotive forces of the electromagnetic excitation coils (17) of the stator (13).

5. The gear motor (101) as claimed in one of the preceding claims, wherein the device (25) for determining the angular position of the rotor (15) is configured to detect a change of state of the signal from the Hall effect sensor (27), said change of state being associated with a predetermined position of the rotor (15) and to correct the measurement from the output angular position sensor (110) on the basis of said detection of the change of state.

6. The gear motor (101) as claimed in one of the preceding claims, wherein:
- the rotor (15) comprises a predetermined number of magnetic poles,
- the control magnet (29, 29') comprises a number of magnetic poles equal to or greater than the number of magnetic poles of the rotor (15) and,
- the magnetic poles of the control magnet (29) are in phase with magnetic poles of the rotor (15) such that the sending of a control signal powering the electromagnetic excitation coils (17) of the stator (13) is synchronized with the detection of a change of state of the signal from the Hall effect sensor (27).

7. The gear motor (101) as claimed in one of the preceding claims, wherein the device (25) for determining the angular position of the rotor (15) is configured to
- determine the angular position of the rotor (15) on the basis of the signals from, on the one hand, the Hall effect sensor or sensors and, on the other hand, the output angular position sensor (110) for rotation speeds of the rotor below a predetermined threshold, and
- determine the angular position of the rotor (15) on the basis of the back-electromotive force signals from the electromagnetic excitation coils (17) of the stator (13) for rotation speeds of the rotor equal to or above the predetermined threshold,
and wherein the device (25) for determining the angular position of the rotor (15) is configured to correct the angular measurement from the Hall effect sensor or sensors and/or from the output angular position sensor (110) on the basis of the signals measuring the back-electromotive forces of the electromagnetic excitation coils (17) of the stator (13).

8. A wiper system, in particular for a motor vehicle comprising a gear motor (1) as claimed in one of the preceding claims.

9. A method for controlling an electric motor (103) of a gear motor (101), in particular for wiper systems, the gear motor (101) comprising:
- a brushless direct current electric motor (103) comprising:
- a rotor (15),
- a stator (13) having electromagnetic excitation coils (17) for the rotor (15),
- a speed-reducing mechanism (104) linked on one side to the rotor of the electric motor (103) and on the other side to an output shaft (109) intended to be linked to an external mechanism, in particular a wiper system, the speed-reducing mechanism (109) having a predefined reduction ratio and,
- an output angular position sensor (110) configured to measure the angular position of the output shaft (109),
- one or two Hall effect sensors (27, 27a, 27b) associated with a control magnet (29, 29', 29", 29''') secured in rotation to the rotor (15), said method comprising the following steps:
(a) for rotation speeds of the rotor below a predetermined threshold:
- the angular position of the rotor (15) is determined on the basis of the angular position sensor of the output shaft (109) by taking into account the reduction ratio of the speed-reducing mechanism (104) and the angular measurement from the output angular position sensor (110) is corrected on the basis of the signal from the Hall effect sensor or sensors (27, 27a, 27b) or on the basis of the back-electromotive force signals,
(b) for rotation speeds of the rotor equal to or above the predetermined threshold,
the angular position of the rotor (15) is determined on the basis of the back-electromotive force signals from the electromagnetic excitation coils (17) of the stator (13),
- control signals are generated to power the electromagnetic excitation coils (17) of the stator (13) as a function of the angular position of the rotor (15) determined in the preceding steps.

10. The method for controlling an electric motor (103) of a gear motor (101) as claimed in the preceding claim, wherein the angular measurement from the output angular position sensor (110) and from the Hall effect sensor or sensors (27, 27a, 27b) is corrected on the basis of the back-electromotive force signals.
